# EUROPEAN PATENT APPLICATION

(11) **EP 4 806 637 A1**
(43) Date of publication of application: **16.09.2026**
(21) Application number: 26163714.4
(22) Date of filing: 10.03.2026
(51) Int. Cl.: B32B 27/20, B32B 27/08, B32B 27/12, B32B 27/32

(54) **MULTILAYER POLYMER-BASED STRUCTURES**

(30) Priority: 10.03.2025 US 202563769532 P
(71) Applicant: Polytex Fibers LLC, Houston, TX 77041 (US)
(72) Inventor: KRONIGSFELD, Markus, Houston TX, 77041 (US); DELGADO, Gustavo, Houston TX, 77041 (US); WALTHER, Brian, Houston TX, 77041 (US)
(74) Representative: Zimmermann & Partner Patentanwälte mbB

(57) **Abstract**

Embodiments of the present disclosure generally relate to multilayer polymer-based structures and methods of manufacturing the same. In one embodiment, a multilayer structure includes a first layer comprising a first polyolefin layer, a second layer comprising a polypropylene layer, a third layer comprising a second polyolefin layer, wherein the second layer is in direct contact with and bonded to both said first and third layers' and wherein the second layer comprises a first blend of polypropylene resins.

## Description

### BACKGROUND

### Field

Embodiments of the present invention generally relate to multilayer polymer-based structures and methods of manufacturing the same.

### Description of the Related Art

Multilayer polymer-based structures, such as used in packaging, often have issues that limit the usefulness and effectiveness to manufacturers, packers, and end users.

Layers of polypropylene or polyethylene films are transparent or translucent, and thus, multi-layer structures may be transparent or translucent. The transparent or translucent structures may make reading print on the layers difficult, show underlying layers, such as fabrics, and show underlying products. Also, some structures have poor resistance to food products, such as grease, which may make the packaging and products contained therein unattractive.

Thus, there is a need in the art for improved multilayer polymer-based structures, and a need for such improved multilayer polymer-based structures in packaging.

### SUMMARY

The present disclosure relates to multilayer polymer-based structures and methods of manufacturing the same.

In one embodiment, a multilayer structure is provided, including a first layer comprising a first polyolefin layer, a second layer comprising a white opaque polypropylene layer, a third layer comprising at least a second polyolefin layer, wherein the second layer is in direct contact with and bonded to both said first and third layers, wherein the opaque polypropylene layer comprises a first blend of polypropylene resins and one or more white pigments, and wherein the at least the second polyolefin layer comprises one or more polyolefin layers; and wherein the third layer comprises a fabric.

In one embodiment, a multilayer structure is provided, including a first layer comprising a first polyolefin layer, a second layer comprising a polypropylene layer, a third layer comprising a second polyolefin layer, wherein the second layer is in direct contact with and bonded to both said first and third layers' and wherein the second layer comprises a first blend of polypropylene resins.

In one embodiment, a process for forming a multilayer structure is provided, including extrusion laminating or spray coating a second layer between a first layer comprising a first polyolefin layer and a third layer comprising a second polyolefin layer, wherein the second layer is in direct contact with and bonded to at least the first and third layers, and wherein the second layer comprises a first blend of polypropylene resins
In another embodiment, a multilayer structure is provided, including a structural layer having a first side and a second side, and comprising a polymer fabric, a first polymer layer deposited on the first side of the structural layer, wherein the first polymer layer comprises a first connecting layer deposited on the structural layer and comprising a material selected from the group consisting of a propylene-ethylene copolymer, an ethylene homopolymer, an ethylene alpha olefin copolymer, an ethylene-vinyl acetate polymer, ethylene methyl acrylate polymer, ethylene butyl acrylate polymer, and combinations thereof and a heat sealable layer deposited on the first connecting layer, wherein the heat sealable layer comprises, a low-density polyethylene polymer and an ethylene alpha olefin containing copolymer produced using a heterogeneous catalysis, second polymer layer deposited on the second side of the structural layer, wherein the second polymer layer comprises a second connecting layer deposited on the structural layer and comprising a material selected from the group consisting of a propylene-ethylene copolymer, an ethylene homopolymer, an ethylene alpha olefin copolymer, an ethylene-vinyl acetate polymer, ethylene methyl acrylate polymer, ethylene butyl acrylate polymer, and combinations thereof, a functional polymer layer deposited on the second connecting layer, and a surface layer deposited on the functional polymer layer.

### BRIEF DESCRIPTION OF THE DRAWINGS

So that the manner in which the above recited features of the present disclosure can be understood in detail, a more particular description of the disclosure, briefly summarized above, may be had by reference to embodiments, some of which are illustrated in the appended drawing(s). It is to be noted, however, that the appended drawing(s) illustrate only exemplary embodiments of the disclosure and are therefore not to be considered limiting of its scope, as the disclosure may admit to other equally effective embodiments.
Figure 1 illustrates an isometric view of a polymer-based multilayer structure, according to certain embodiments.
Figure 2 illustrates another isometric view of a polymer-based multilayer structure, according to certain embodiments.

To facilitate understanding, identical reference numerals have been used, where possible, to designate identical elements that are common to the figure(s). It is contemplated that elements and features of one embodiment may be beneficially incorporated in other embodiments without further recitation.

### DETAILED DESCRIPTION

Embodiments of the present disclosure, examples of which are depicted in the attached Figures, relate to multilayer polymer-based structures.

Embodiments of the present disclosure include multilayer polymer-based structures using layers of polypropylene, polyethylene or a combination of polypropylene and polyethylene.

Embodiments of the present disclosure beneficially provide: increase white opacity of multilayer polymer-based structures, improve print quality of multilayer polymer-based structures, an enhanced lamination process to increase white opacity and the improve print quality, improved grease resistance or improved resistance to grease permeation, and weight reduction and enhanced durability of the multilayer polymer-based structures. In addition, in embodiments of the present disclosure, additional layer or layers provide for concealing underlying layers (fabrics) to deliver a smoother surface for higher-quality applications.

An embodiment of the present disclosure includes a multilayer structure, including a first layer comprising a first polyolefin layer, a second layer comprising a polypropylene layer, a third layer comprising a second polyolefin layer, with the second layer in direct contact with and bonded to both said first and third layers, and the second layer including a first blend of polypropylene resins.

Embodiments of the present disclosure use pigments and/or inks with one or more layers. The blend of polypropylene resins may further include one or more pigments. The first layer may include inks and pigments disposed on a surface of the first layer to form one or more images or shapes. The inks and pigments may be disposed on a top surface, a bottom surface, or both top and bottom surfaces of the first layer. The inks and pigments may be disposed in a continuous manner, such as a layer, or semi-continuous, such as to form one or more symbols or images on the first layer. The pigments may include one or more white pigments. In one embodiment, the first layer is transparent, and the second layer a white pigmented layer.

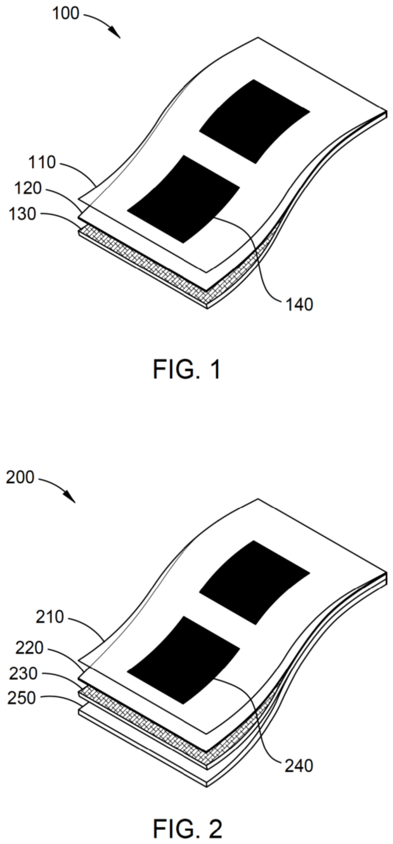

Referring to FIG. 1, an embodiment of the present disclosure includes a multilayer structure 100 including a first layer 110 comprising a first polyolefin layer, the first layer is disposed on a second layer 120 comprising a polypropylene layer, and the second layer 120 is disposed on a third layer 130 comprising a second polyolefin layer. The second layer 120 is in direct contact with and bonded to both the first layer 110 and third layer 130. The second layer 120 includes a first blend of polypropylene resins. In FIG. 1, the first layer 110 includes inks and pigments 140 disposed on a surface of the first layer 110 to form one or more images or shapes. The surface may be a top surface, a bottom surface, or both. Inks and pigments 140 disposed on the bottom surface of a layer may be in a reverse print format.

An embodiment of the present disclosure includes a multilayer structure, including a first layer comprising a first polyolefin layer, a second layer comprising an opaque polypropylene layer, a third layer comprising a second polyolefin layer, wherein the second layer is in direct contact with and bonded to both said first and third layers, and where the opaque polypropylene layer comprises a first blend of polypropylene resins and one or more pigments. The one or more pigments comprise one or more white pigments. The second layer may be a conformal layer, a continuous or non-continuous coating, or a non-conformal surface application.

An embodiment of the present disclosure includes a multilayer structure, including a first layer comprising a first polyolefin layer, a second layer comprising a white opaque polypropylene layer, a third layer comprising a second polyolefin layer, wherein the second layer is in direct contact with and bonded to both said first and third layers, and where the opaque polypropylene layer comprises a first blend of polypropylene resins and one or more white pigments. The second layer may include one or more additional pigments. The second layer may be a conformal layer, a continuous or non-continuous coating, or a non-conformal surface application. The blend of polypropylene resins may comprise four different propylene resins.

Embodiments of the present disclosure include a coating that may be disposed on one or more of the first layer, the second layer, and the third layer.

Embodiments of the present disclosure include a fourth layer in direct contact with and bonded to the third layer of any three layer multilayer structure described herein. The fourth layer comprises a second blend of polypropylene resins. The fourth layer may be a conformal layer, a continuous or non-continuous coating, or a non-conformal surface application. The fourth layer may be an opaque polypropylene layer. The fourth layer is in direct contact with and bonded to the third layer. The fourth layer may be the same polypropylene layer as the second layer.

The first and second blends of polypropylene resins may be the same blend or different blends. The second blend of polypropylene resins may further include one or more pigments.

Referring to FIG. 2, an embodiment of the present disclosure includes a multilayer structure 200 including a first layer 210 comprising a first polyolefin layer, the first layer is disposed on a second layer 220 comprising a polypropylene layer, the second layer 220 is disposed on a third layer 230 comprising a second polyolefin layer, and the third layer is disposed on a fourth layer 250. in direct contact with and bonded to the third layer. The second layer 220 is in direct contact with and bonded to both the first layer 210 and third layer 230. The fourth layer 250 is in direct contact with and bonded to the third layer 230. The second layer 220 includes a first blend of polypropylene resins, and the fourth layer 250 includes a second blend of polypropylene resins.. In FIG. 2, the first layer 210 includes inks and pigments 240 disposed on a surface of the first layer 210 to form one or more images or shapes. The surface may be a top surface, a bottom surface, or both. Inks and pigments 240 disposed on the bottom surface of a layer may be in a reverse print format.

Embodiments of the present disclosure may include the first, second, third, and optional fourth layers each being transparent, translucent, or opaque. In one embodiment, the first layer that may be transparent or translucent, the second layer may be opaque, and the third layer being a fabric and may be transparent, translucent, or opaque. In one embodiment, the second layer is more opaque than the first layer, the third layer, or both the first layer and third layer. In one embodiment with a fourth layer, the fourth layer may be opaque, or may be more opaque than an adjacent layer.

Embodiments of the present disclosure include a coating that may be disposed on one or more of the first layer, the second layer, the third layer, and the fourth layer.

Embodiments of the present disclosure include layers that may be made of polypropylene and polyethylene materials.

In one embodiment, the first layer comprising a first polyolefin layer may include a material comprising biaxially oriented polypropylene (BOPP), machine direction-oriented polyethylene (PE-MDO) or a combination thereof. In another embodiment, the first layer may include a material selected from the group of unoriented polypropylene, unoriented polyethylene, biaxially oriented polypropylene (BOPP), biaxially oriented polyethylene (BOPE), biaxially oriented polyethylene terephthalate (BOPET), machine direction-oriented polypropylene (MDOPE), machine direction-oriented polyethylene (MDOPE), and combinations thereof. Additionally, the first layer 110 may form a surface layer, and could possess any number of attributes such as an oxygen barrier, moisture barrier, matte composition, enhanced tactile properties and combinations thereof.

The second layer may be a polypropylene material. In particular, the second layer may be blend of polypropylene resins. If used, the fourth layer may be a polypropylene material, such as a blend of polypropylene resins. The fourth layer may be a propylene material that is the same or different from the polypropylene material of the second layer.

In one embodiment, the third layer may include a fabric. The fabric may be made of one or more layers of a polyolefin, and may be made of polypropylene, polyethylene, or a combination thereof. In some embodiments, the polymer fabric includes a polymeric material including a polypropylene fabric, a polyethylene fabric, or a polypropylene and polyethylene fabric. The polymer fabric may be a polypropylene fabric made from a blend of polypropylene resins. The polyethylene or polypropylene fabric may also include multilayer tapes used to form the fabric.

The fabric may be colored or include pigments, such as a grey or regular white color. The fabric may also be ultra-violet (UV) light resistant.

Embodiments of the present disclosure include forming the multilayer polymer-based structures by laminating processes. The laminating processes may include extrusion laminating or spray coating processes. In one embodiment, the second layer is added to the multilayer structure using extrusion lamination or spray coating. In one embodiment, the fourth layer is added to the multilayer structure using extrusion lamination or spray coating.

Embodiments of the present disclosure may include a process for forming a multilayer structure, including extrusion laminating or spray coating a second layer between a first layer comprising a first polyolefin layer and a third layer comprising a second polyolefin layer, with the second layer is in direct contact with and bonded to at least the first and third layers and the second layer may include a first blend of polypropylene resins

Embodiments of the present disclosure may include an extrusion laminating process or a spraying process that may include heating, pressure, applying an adhesive, or combinations thereof. In one embodiment, the heating comprises infrared heating. In one embodiment, the second layer is added between the first and third layer as a hot polymer using a heat extrusion process.

In one embodiment, an adhesive may be disposed between one or more layers for the lamination process. Preferably, the adhesive is applied by a solventfree adhesive lamination process. In one embodiment, the first layer comprises two or more layers, such as two layers of polypropylene, and the adhesive is disposed therebetween

Embodiment of the present disclosure may include multilayer polymer-based structures having more than four layers and may include adding one or more layers including the blends of polyethylene resin subsequent to each layer of olefin layers as described herein.

Embodiment of the present disclosure may include a multilayer structure, including a first layer comprising a first polyolefin layer, a second layer comprising a white opaque polypropylene layer, a third layer comprising a second polyolefin layer, where the second layer is in direct contact with and bonded to both said first and third layers, where the opaque polypropylene layer comprises a first blend of polypropylene resins and one or more white pigments, and wherein the at least the second polyolefin layer comprises one or more polyolefin layers wherein the third layer comprises a fabric.

Embodiment of the multilayer structure may include the following. In the multilayer structure, the opaque polypropylene layer may further include one or more additional pigments. The multilayer structure may further include a fourth layer including an opaque polypropylene layer, wherein the fourth layer is in direct contact with and bonded to the third layer. The fourth layer may include a second blend of polypropylene resins and one or more pigments. The multilayer structure may be resistant to grease permeation. The first layer may be more transparent or translucent than the second layer. The second layer may be added to the multilayer structure using extrusion lamination or spray coating. The fourth layer may be added to the multilayer structure using extrusion lamination or spray coating. The first polyolefin layer may include biaxially oriented polypropylene, machine direction-oriented polyethylene or a combination thereof. The third layer may include one or more polyolefin layers in the form of a fabric. The multilayer structure may be flexible packaging. The first layer may further include inks and pigments disposed on a surface of the first layer to form one or more images or shapes.

Embodiment of the present disclosure may include a multilayer structure, including a first layer comprising a first polyolefin layer, a second layer comprising a polypropylene layer, a third layer comprising a second polyolefin layer, where the second layer is in direct contact with and bonded to both said first and third layers, and wherein the second layer comprises a first blend of polypropylene resins.

Embodiment of the multilayer structure may include the following. In the multilayer structure, the first blend of polypropylene resins further comprises one or more pigments. The multilayer structure may further include a fourth layer in direct contact with and bonded to the third layer. The fourth layer may include a second blend of polypropylene resins and optionally, one or more pigments. The multilayer structure may be resistant to grease permeation. The first layer may be more transparent or translucent than the second layer. The second layer may be opaque. The second layer may be more opaque than the first layer, the third layer, or both the first layer and third layer. The second layer may be added to the multilayer structure using extrusion lamination or spray coating. The fourth layer may be added to the multilayer structure using extrusion lamination or spray coating. The first polyolefin layer may include biaxially oriented polypropylene, machine direction-oriented polyethylene or a combination thereof. The third layer may include one or more polyolefin layers in the form of a fabric. The multilayer structure may be flexible packaging. The first layer may further include inks and pigments disposed on a surface of the first layer to form one or more images or shapes.

Embodiment of the present disclosure may include a process for forming a multilayer structure, including extrusion laminating or spray coating a second layer between a first layer comprising a first polyolefin layer and a third layer comprising a second polyolefin layer, wherein the second layer is in direct contact with and bonded to at least the first and third layers and wherein the second layer comprises a first blend of polypropylene resins.

The process may further include extrusion laminating or spray coating a fourth layer on the third layer of the multilayer structure. The process may include the fourth layer comprising a second blend of polypropylene resins. The process may include the extrusion laminating process or spraying process including heating, pressure, applying an adhesive, or combinations thereof. The process may include the heating using infrared heating. The process may include the first blend of polypropylene resins further comprising one or more pigments. The process may include inks and pigments disposed on a surface of the first layer to form one or more images or shapes.

In one example, a multilayer structure of Fig. 1 has a first layer of biaxially oriented polypropylene (BOPP), machine direction-oriented polyethylene (PE-MDO) disposed on a second layer formed from a blend of polypropylene resins and one or more white pigments, which second layer is disposed on a third layer of a polypropylene fabric, a polyethylene fabric, or a polypropylene and polyethylene fabric. A layer of ink may be disposed between the first and second layers. The second layer is formed by an extrusion lamination process. The first layer, the second layer, the third layer, and any optional ink layer, may each have a thickness from about 1 µm to 100 µm.

In another example, a multilayer structure of Fig. 2 has a first layer of biaxially oriented polypropylene (BOPP), machine direction-oriented polyethylene (PE-MDO) disposed on a second layer formed from a blend of polypropylene resins and one or more white pigments, which second layer is disposed on a third layer of a polypropylene fabric, a polyethylene fabric, or a polypropylene and polyethylene fabric, which third layer is disposed on a fourth layer formed from a second blend of polypropylene resins and one or more white pigments. A layer of ink may be disposed between the first and second layers. The second layer and the fourth layer are formed by an extrusion lamination process. The first layer, the second layer, the third layer, the fourth layer, and any optional ink layer, may each have a thickness from about 1µm to 100 µm.

Embodiments of the present disclosure include that the multilayer structures described herein may be converted into a package, such as flexible packaging.

In another embodiment, a bag is provided having a multilayer structure according to embodiments described herein. The bag may include or comprise flexible packaging. Examples of suitable bags include a multifaced folded bag and tube shaped bags, also known as pillow pouches, among others.

Examples of suitable bag structures that may use embodiments of the multilayer structures described herein may be found in US Patent Nos. 9,669,983, 9,969,529, 10,287,062, 10,913,587, 11,027,888, and 11,801,987, and US Patent Publication Nos. 2022/0135305, 2022/0185567, and 2022/0204239, all of which are incorporated by reference herein to the extent not inconsistent with the disclosure herein.

An embodiment of the present disclosure includes a bag including a front wall, a back wall, a first side wall, and a second side wall, wherein the first side wall and the second side wall are disposed on opposite sides of the front wall and the back wall and connect the front wall to the back wall, forming the bag having a top end and a bottom end, each of the front wall, the back wall, the first side wall, and the second side wall, having an interior surface, an exterior surface, and comprising a multilayer structure as described herein.

In another embodiment, a method of manufacturing a bag includes providing a continuous sheet of material, wherein the material comprises a multilayer structure as described herein, and cutting an individual bag blank from the continuous sheet, forming the individual blank into a bag having a top end and a bottom end, a front wall, a back wall, a first side wall, and a second side wall, wherein the first side wall and the second side wall are disposed on opposite sides of the front wall and the back wall and connect the front wall to the back wall.

In one embodiment, a method of manufacturing a bag includes providing a continuous sheet of material, wherein the material comprises a multilayer structure as described herein, and, cutting an individual bag blank from the continuous sheet, forming the individual blank into a bag having a top end and a bottom end, a front wall, a back wall, a first side wall, and a second side wall, wherein the first side wall and the second side wall are disposed on opposite sides of the front wall and the back wall and connect the front wall to the back wall.

### EMBODIMENTS LISTING

The present disclosure provides, among others, the following aspects, each of which can be considered as optionally including any alternate embodiments:
Clause 1. A multilayer structure, comprising a first layer comprising a first polyolefin layer, a second layer comprising a white opaque polypropylene layer, a third layer comprising at least a second polyolefin layer, wherein the second layer is in direct contact with and bonded to both said first and third layers, wherein the opaque polypropylene layer comprises a first blend of polypropylene resins and one or more white pigments, and wherein the at least the second polyolefin layer comprises one or more polyolefin layers; and wherein the third layer comprises a fabric.
Clause 2. The multilayer structure of Clause 1, wherein the opaque polypropylene layer further comprises one or more additional pigments.
Clause 3. The multilayer structure of Clauses 1 or 2, further comprising a fourth layer comprising an opaque polypropylene layer, wherein the fourth layer is in direct contact with and bonded to the third layer.
Clause 4. The multilayer structure of Clause 3, wherein the fourth layer comprises a second blend of polypropylene resins and one or more pigments.
Clause 5. The multilayer structure of Clauses 1 to 4, wherein the multilayer structure is resistant to grease permeation.
Clause 6. The multilayer structure of Clauses 1 to 5, wherein the first layer is more transparent or translucent than the second layer.
Clause 7. The multilayer structure of Clauses 1 to 6, wherein the second layer is added to the multilayer structure using extrusion lamination or spray coating.
Clause 8. The multilayer structure of Clauses 1 to 7, wherein the fourth layer is added to the multilayer structure using extrusion lamination or spray coating.
Clause 9. The multilayer structure of Clauses 1 to 8, wherein the first polyolefin layer comprises biaxially oriented polypropylene, machine direction oriented polyethylene or a combination thereof.
Clause 10. The multilayer structure of Clauses 1 to 9, wherein the third layer comprises one or more polyolefin layers in the form of a fabric.
Clause 11. The multilayer structure of Clauses 1 to 10, wherein the multilayer structure comprises flexible packaging.
Clause 12. The multilayer structure of Clauses 1 to 11, wherein the first layer further comprises inks and pigments disposed on a surface of the first layer to form one or more images or shapes.
Clause 13. A multilayer structure, comprising a first layer comprising a first polyolefin layer, a second layer comprising a polypropylene layer, a third layer comprising a second polyolefin layer, wherein the second layer is in direct contact with and bonded to both said first and third layers and wherein the second layer comprises a first blend of polypropylene resins.
Clause 14. The multilayer structure of Clause 13, wherein the first blend of polypropylene resins further comprises one or more pigments.
Clause 15. The multilayer structure of Clauses 13 or 14, further comprising a fourth layer in direct contact with and bonded to the third layer.
Clause 16. The multilayer structure of Clause 15, wherein the fourth layer comprises a second blend of polypropylene resins.
Clause 17. The multilayer structure of Clause 16, wherein the second blend of polypropylene resins further comprises one or more pigments.
Clause 18. The multilayer structure of Clauses 13 to 17, wherein the multilayer structure is resistant to grease permeation.
Clause 19. The multilayer structure of Clause 14, wherein the second layer is opaque.
Clause 20. The multilayer structure of Clauses 13 to 19, wherein the second layer is more opaque than the first layer, the third layer, or both the first layer and third layer.
Clause 21. The multilayer structure of Clauses 13 to 20, wherein the second layer is added to the multilayer structure using extrusion lamination or spray coating.
Clause 22. The multilayer structure of Clauses 13 to 21, wherein the fourth layer is added to the multilayer structure using extrusion lamination or spray coating.
Clause 23. The multilayer structure of Clauses 13 to 22, wherein the first polyolefin layer comprises biaxially oriented polypropylene, machine direction oriented polyethylene or a combination thereof.
Clause 24. The multilayer structure of Clauses 13 to 23, wherein the third layer comprises a fabric.
Clause 25. The multilayer structure of Clauses 13 to 24, wherein the multilayer structure comprises flexible packaging.
Clause 26. The multilayer structure of Clauses 13 to 25, wherein the first layer further comprises inks and pigments disposed on a surface of the first layer to form one or more images or shapes.
Clause 27. A process for forming a multilayer structure, comprising extrusion laminating or spray coating a second layer between a first layer comprising a first polyolefin layer and a third layer comprising a second polyolefin layer, wherein the second layer is in direct contact with and bonded to at least the first and third layers, and wherein the second layer comprises a first blend of polypropylene resins.
Clause 28. The process of Clause 27, further comprising extrusion laminating or spray coating a fourth layer on the third layer of the multilayer structure.
Clause 29. The process of Clause 28, wherein the fourth layer comprises a second blend of polypropylene resins.
Clause 30. The process of Clauses 27 to 29, wherein the extrusion laminating process or spraying process comprises heating, pressure, applying an adhesive, or combinations thereof.
Clause 31. The process of Clause 30, wherein the heating comprises infrared heating.
Clause 32. The process of Clauses 27 to 31, wherein the first blend of polypropylene resins further comprises one or more pigments.
Clause 33. The process of Clauses 27 to 32, further comprising disposing inks and pigments disposed on a surface of the first layer to form one or more images or shapes.
Clause 34. The process of Clauses 27 to 32, further comprising applying a coating on one or more of the layers of the multilayer structure.
Clause 35. The multilayer structure of Clauses 13 to 25, further comprising a coating disposed on one or more of the layers of the multilayer structure.
Clause 36. The multilayer structure of Clauses 1 to 12, further comprising a coating disposed on one or more of the layers of the multilayer structure.

The phrases, unless otherwise specified, "consists essentially of" and "consisting essentially of" do not exclude the presence of other steps, elements, or materials, whether or not, specifically mentioned in this specification, so long as such steps, elements, or materials, do not affect the basic and novel characteristics of the present disclosure, additionally, they do not exclude impurities and variances normally associated with the elements and materials used.

For the sake of brevity, only certain ranges are explicitly disclosed herein. However, ranges from any lower limit may be combined with any upper limit to recite a range not explicitly recited, as well as, ranges from any lower limit may be combined with any other lower limit to recite a range not explicitly recited, in the same way, ranges from any upper limit may be combined with any other upper limit to recite a range not explicitly recited. Additionally, within a range includes every point or individual value between its end points even though not explicitly recited. Thus, every point or individual value may serve as its own lower or upper limit combined with any other point or individual value or any other lower or upper limit, to recite a range not explicitly recited.

All documents described herein are incorporated by reference herein, including any priority documents and or testing procedures to the extent they are not inconsistent with this text. As is apparent from the foregoing general description and the specific embodiments, while forms of the present disclosure have been illustrated and described, various modifications can be made without departing from the spirit and scope of the present disclosure. Accordingly, it is not intended that the present disclosure be limited thereby. Likewise, the term "comprising" is considered synonymous with the term "including" for purposes of United States law. Likewise whenever a composition, an element or a group of elements is preceded with the transitional phrase "comprising," it is understood that we also contemplate the same composition or group of elements with transitional phrases "consisting essentially of," "consisting of," "selected from the group of consisting of," or "is" preceding the recitation of the composition, element, or elements and vice versa.

While the foregoing is directed to embodiments of the present disclosure, other and further embodiments of the disclosure may be devised without departing from the basic scope thereof, and the scope thereof is determined by the claims that follow

## Claims

1. A multilayer structure, comprising
a first layer comprising a first polyolefin layer;
a second layer comprising a white opaque polypropylene layer;
a third layer comprising at least a second polyolefin layer;
wherein the second layer is in direct contact with and bonded to both said first and third layers;
wherein the opaque polypropylene layer comprises a first blend of polypropylene resins and one or more white pigments; and
wherein the second polyolefin layer comprises one or more polyolefin layers; and
wherein the third layer comprises a fabric.

2. The multilayer structure of claim 1, wherein the opaque polypropylene layer further comprises one or more additional pigments.

3. The multilayer structure of any of claims 1 to 2, further comprising a fourth layer comprising an opaque polypropylene layer, wherein the fourth layer is in direct contact with and bonded to the third layer, particularly wherein the fourth layer comprises a second blend of polypropylene resins and one or more pigments.

4. The multilayer structure of any of claims 1 to 3, wherein the first layer is more transparent or translucent than the second layer.

5. The multilayer structure of any of claims 1 to 4, wherein the first polyolefin layer comprises biaxially oriented polypropylene, machine direction oriented polyethylene or a combination thereof, and wherein the third layer comprises one or more polyolefin layers in the form of a fabric.

6. The multilayer structure of any of claims 1 to 5, wherein the multilayer structure comprises flexible packaging.

7. A multilayer structure, comprising
a first layer comprising a first polyolefin layer;
a second layer comprising a polypropylene layer;
a third layer comprising a second polyolefin layer;
wherein the second layer is in direct contact with and bonded to both said first and third layers; and
wherein the second layer comprises a first blend of polypropylene resins.

8. The multilayer structure of claim 7, further comprising a fourth layer in direct contact with and bonded to the third layer, particularly wherein the fourth layer comprises a second blend of polypropylene resins.

9. The multilayer structure of any of claims 7 to 8, wherein the second layer is opaque.

10. The multilayer structure of any of claims 7 to 9, wherein the second layer is more opaque than the first layer, the third layer, or both the first layer and third layer.

11. The multilayer structure of any of claims 7 to 10, wherein the first polyolefin layer comprises biaxially oriented polypropylene, machine direction oriented polyethylene or a combination thereof, and wherein the third layer comprises a fabric.

12. The multilayer structure of any of claims 7 to 11, wherein the multilayer structure comprises flexible packaging.

13. The multilayer structure of any of claims 1 to 12, wherein the first layer further comprises inks and pigments disposed on a surface of the first layer to form one or more images or shapes.

14. A process for forming a multilayer structure, comprising:
extrusion laminating or spray coating a second layer between a first layer comprising a first polyolefin layer and a third layer comprising a second polyolefin layer;
wherein the second layer is in direct contact with and bonded to at least the first and third layers; and
wherein the second layer comprises a first blend of polypropylene resins.

15. The process of claim 14, further comprising extrusion laminating or spray coating a fourth layer on the third layer of the multilayer structure.

16. The process of any of claims 14 to 15, wherein the extrusion laminating process or spraying process comprises heating, pressure, applying an adhesive, or combinations thereof.

17. The process of any of claims 14 to 16, further comprising disposing inks and pigments disposed on a surface of the first layer to form one or more images or shapes.
